# EUROPEAN PATENT APPLICATION

(11) **EP 4 852 435 A1**
(43) Date of publication of application: **09.12.2026**
(21) Application number: 25767197.4
(22) Date of filing: 20.02.2025
(51) Int. Cl.: H04N 21/43

(54) **AUDIO-VIDEO SYNCHRONIZATION METHOD AND APPARATUS, DEVICE, AND COMPUTER-READABLE STORAGE MEDIUM**

(30) Priority: 05.03.2024 CN 202410254076
(71) Applicant: GUANGDONG OPPO MOBILE TELECOMMUNICATIONS CORP., LTD., Dongguan, Guangdong 523860 (CN)
(72) Inventor: CHEN, Runcheng, Dongguan, Guangdong 523860 (CN); ZHU, Haitao, Dongguan, Guangdong 523860 (CN)
(74) Representative: Grassi, Stefano
(86) International application number: PCT/CN2025/078253
(87) International publication number: WO 2025/185457

(57) **Abstract**

The present application discloses an audio-video synchronization method and apparatus, device, and computer-readable storage medium. The method is applied to a sending device, and includes: determining, based on communication with multiple receiving devices, a target communication delay applicable to the multiple receiving devices; determining, according to the target communication delay, a playback delay applicable to the multiple receiving devices; and sending, to the multiple receiving devices, a media data frame carrying the playback delay, so that audio-video synchronization is enabled among the multiple receiving devices when playing the media data frame according to the playback delay. In this way, audio-video synchronization across multiple devices can be controlled, thereby improving the audio-video synchronization effect.

## Description

### CROSS-REFERENCE OF RELATED APPLICATION

This application claims priority to Chinese Patent Application No. 202410254076.0, filed with the China National Intellectual Property Administration on March 05, 2024, and entitled "AUDIO-VIDEO SYNCHRONIZATION METHOD AND APPARATUS, DEVICE, AND COMPUTER-READABLE STORAGE MEDIUM", the entire contents of which are incorporated herein by reference.

### TECHNICAL FIELD

The disclosure relates to the field of audio-video technology, and particularly to an audio-video synchronization method and apparatus, a device, and a computer-readable storage medium.

### BACKGROUND

With the development and widespread adoption of various intelligent terminals and high-speed wireless networks, technologies on multi-screen interaction and data sharing among devices based on network transmission are being developed and have been widely applied.

Among them, one-to-many audio-video sharing among devices is a new application scenario, in which a source terminal sends audio-video information to multiple destination terminals (i.e., sink terminals), and the multiple sink terminals synchronously display and play the information. Although there are already many audio-video synchronization solutions in the related art, the existing solutions are not comprehensive in consideration, resulting in unsatisfactory audio-video synchronization across multiple device terminals and poor performance.

### SUMMARY

The technical solutions of the disclosure are implemented as follows.

In a first aspect, embodiments of the disclosure provide an audio-video synchronization method implemented by a sending device, and the method includes:
determining, based on communication with multiple receiving devices, a target communication delay applicable to the multiple receiving devices;
determining, according to the target communication delay, a playback delay applicable to the multiple receiving devices; and
sending, to the multiple receiving devices, a media data frame carrying the playback delay, so that audio-video synchronization is enabled among the multiple receiving devices when playing the media data frame according to the playback delay.

In a second aspect, the embodiments of the disclosure provide an audio-video synchronization method implemented by a receiving device, and the method includes:
receiving a media data frame carrying a playback delay sent from a sending device;
determining a decoding instant of the media data frame, according to the playback delay; and
controlling the media data frame to be decoded and played upon reaching the decoding instant, thereby enabling audio-video synchronization when playing the media data frame.

In a third aspect, the embodiments of the disclosure provide an audio-video synchronization apparatus implemented in a sending device. The audio-video synchronization apparatus includes a first determination unit and a first transceiver unit.

The first determination unit is configured to determine, based on communication with multiple receiving devices, a target communication delay applicable to the multiple receiving devices, and determine, according to the target communication delay, a playback delay applicable to the multiple receiving devices.

The first transceiver unit is configured to send, to the multiple receiving devices, a media data frame carrying the playback delay, so that audio-video synchronization is enabled among the multiple receiving devices when playing the media data frame according to the playback delay.

In a fourth aspect, the embodiments of the disclosure provide an audio-video synchronization apparatus implemented in a receiving device. The audio-video synchronization apparatus includes a second transceiver unit and a playback unit.

The second transceiver unit is configured to receive a media data frame carrying a playback delay sent from a sending device.

The playback unit is configured to determine a decoding instant of the media data frame according to the playback delay, and control the media data frame to be decoded and played upon reaching the decoding instant, thereby enabling audio-video synchronization when playing the media data frame.

In a fifth aspect, the embodiments of the disclosure provide an electronic device including a memory and a processor.

The memory is configured to store a computer program executable on the processor.

The processor is configured to, when executing the computer program, perform the method according to the first aspect or the method according to the second aspect.

In a sixth aspect, the embodiments of the disclosure provide a computer-readable storage medium having stored thereon a computer program. The computer program, when being executed by a processor, implements the method according to the first aspect or the method according to the second aspect.

In a seventh aspect, the embodiments of the disclosure provides a computer program product, including a computer program or instructions. The computer program or instructions, when being executed by a processor, implement the method according to the first aspect or the method according to the second aspect.

### BRIEF DESCRIPTION OF THE DRAWINGS

FIG. 1 is a first schematic flowchart of an audio-video synchronization method provided by the embodiments of the disclosure.
FIG. 2 is a second schematic flowchart of an audio-video synchronization method provided by the embodiments of the disclosure.
FIG. 3 is a schematic diagram illustrating the clock synchronization principle between a sending terminal and a receiving terminal provided by the embodiments of the disclosure.
FIG. 4 is a detailed schematic flowchart of the audio-video synchronization method provided by the embodiments of the disclosure.
FIG. 5 is a first schematic structural diagram of an audio-video synchronization system provided by the embodiments of the disclosure.
FIG. 6 is a first schematic structural diagram of an audio-video synchronization apparatus provided by the embodiments of the disclosure.
FIG. 7 is a second schematic structural diagram of an audio-video synchronization apparatus provided by the embodiments of the disclosure.
FIG. 8 is a specific hardware structural diagram of an electronic device provided by the embodiments of the disclosure.
FIG. 9 is a second schematic structural diagram of the audio-video synchronization system provided by the embodiments of the disclosure.

### DETAILED DESCRIPTION OF PREFERRED EMBODIMENTS

In a first aspect, the embodiments of the disclosure provides an audio-video synchronization method implemented by a sending device, the method including:
determining, based on communication with multiple receiving devices, a target communication delay applicable to the multiple receiving devices;
determining, according to the target communication delay, a playback delay applicable to the multiple receiving devices; and
sending, to the multiple receiving devices, a media data frame carrying the playback delay, so that audio-video synchronization is enabled among the multiple receiving devices when playing the media data frame according to the playback delay.

In some embodiments, determining, based on communication with the multiple receiving devices, the target communication delay applicable to the multiple receiving devices includes:
performing statistics on probe communication delays between the sending device and each of the multiple receiving devices within a preset time period, and determining an average communication delay for each of the multiple receiving devices within the preset time period; and
determining the target communication delay according to the average communication delays of the multiple receiving devices.

In some embodiments, determining the target communication delay according to the average communication delays of the multiple receiving devices includes:
determining, as the target communication delay, a maximum average communication delay among the multiple average communication delays; or
determining, as the target communication delay, a median average communication delay among the multiple average communication delays; or
determining, as the target communication delay, an average value of the multiple average communication delays.

In some embodiments, the method further includes:
sending a first probe packet to the multiple receiving devices;
receiving first response information returned by each of the multiple receiving devices; and
determining the probe communication delay between the sending device and each of the multiple receiving devices, based on a sending time of the first probe packet and a reception time of the first response information.

In some embodiments, determining, according to the target communication delay, the playback delay applicable to the multiple receiving devices includes:
determining a maximum audio delay and a preset processing delay of the multiple receiving devices; and
determining the playback delay applicable to the multiple receiving devices, by performing a summation operation on the target communication delay, the maximum audio delay, and the preset processing delay.

In some embodiments, the method further includes:
setting a variation amplitude of the playback delay within a preset time interval to not exceed a first threshold.

In a second aspect, the embodiments of the disclosure provide an audio-video synchronization method implemented by a receiving device, the method including:
receiving a media data frame carrying a playback delay sent from a sending device;
determining a decoding instant of the media data frame according to the playback delay; and
controlling the media data frame to be decoded and played upon reaching the decoding instant, thereby enabling audio-video synchronization when playing the media data frame.

In some embodiments, determining the decoding instant of the media data frame according to the playback delay includes:
obtaining a current delay, a decoding consumption time, and a rendering consumption time of the media data frame; and
determining the decoding instant of the media data frame, according to the playback delay, the current delay, the decoding consumption time, and the rendering consumption time.

In some embodiments, determining the decoding instant of the media data frame according to the playback delay, the current delay, the decoding consumption time, and the rendering consumption time includes:
determining the decoding instant of the media data frame, by performing a subtraction operation on the current delay, the decoding consumption time, and the rendering consumption time based on the playback delay.

In some embodiments, obtaining the current delay of the media data frame includes:
obtaining an absolute capture time carried in the media data frame; and
determining the current delay of the media data frame, according to the absolute capture time, a local time of the receiving device, and a clock synchronization difference between the sending device and the receiving device.

In some embodiments, the method further includes:
determining a probe communication delay corresponding to a second probe packet;
in a case where the probe communication delay is lower than a second threshold, receiving the second probe packet sent from the sending device, the second probe packet carrying a sending time of the sending device; and
determining the clock synchronization difference between the sending device and the receiving device, according to a reception time at which the receiving device receives the second probe packet and the sending time.

In some embodiments, the decoding instant of the media data frame includes a first decoding instant of a video data frame and a second decoding instant of an audio data frame. Controlling the media data frame to be decoded and played upon reaching the decoding instant includes:
controlling the video data frame to be decoded and played upon reaching the first decoding instant, and controlling the audio data frame to be decoded and played upon reaching the second decoding instant, thereby enabling the audio-video synchronization when playing the media data frame.

In some embodiments, the method further includes:
obtaining a video decoding consumption time and a video rendering consumption time of the video data frame, and obtaining an audio decoding consumption time and an audio rendering consumption time of the audio data frame;
determining the first decoding instant of the video data frame, by performing a subtraction operation on the playback delay, the current delay, the video decoding consumption time, and the video rendering consumption time; and
determining the second decoding instant of the audio data frame, by performing a subtraction operation on the playback delay, the current delay, the audio decoding consumption time, and the audio rendering consumption time.

In some embodiments, the method further includes:
in a case where the current delay is greater than the playback delay, determining a timeout time between the current delay and the playback delay; and
determining a processing mode for the media data frame according to the timeout time.

In some embodiments, determining the processing mode for the media data frame according to the timeout time includes:
when the timeout time is greater than a third threshold, performing frame dropping processing on the media data frame; and
when the timeout time is less than the third threshold, performing accelerated playback processing on the media data frame.

In a third aspect, the embodiments of the disclosure provide an audio-video synchronization apparatus implemented in a sending device. The audio-video synchronization apparatus includes a first determination unit and a first transceiver unit.

The first determination unit is configured to determine, based on communication with multiple receiving devices, a target communication delay applicable to the multiple receiving devices, and determine, according to the target communication delay, a playback delay applicable to the multiple receiving devices.

The first transceiver unit is configured to send, to the multiple receiving devices, a media data frame carrying the playback delay, so that audio-video synchronization is enabled among the multiple receiving devices when playing the media data frame according to the playback delay.

In a fourth aspect, the embodiments of the disclosure provide an audio-video synchronization apparatus implemented in a receiving device. The audio-video synchronization apparatus includes a second transceiver unit and a playback unit.

The second transceiver unit is configured to receive a media data frame carrying a playback delay sent from a sending device.

The playback unit is configured to determine a decoding instant of the media data frame according to the playback delay, and control the media data frame to be decoded and played upon reaching the decoding instant, thereby enabling audio-video synchronization when playing the media data frame.

In a fifth aspect, the embodiments of the disclosure provide an electronic device, including a memory and a processor.

The memory is configured to store a computer program executable on the processor.

The processor is configured to, when executing the computer program, perform the method according to the first aspect or the method according to the second aspect.

In a sixth aspect, the embodiments of the disclosure provide a computer-readable storage medium having stored thereon a computer program. The computer program, when being executed by a processor, implements the method according to the first aspect or the method according to the second aspect.

In a seventh aspect, the embodiments of the disclosure provide a computer program product, including a computer program or instructions. The computer program or instructions, when executed by a processor, implements the method according to the first aspect or the method according to the second aspect.

In order to provide a more thorough understanding of the features and technical contents of the embodiments of the disclosure, the implementation of the embodiments of the disclosure will be described in detail below with reference to the accompanying drawings. The accompanying drawings are for illustrative purposes only, and are not intended to limit the embodiments of the disclosure.

Unless otherwise defined, all technical and scientific terms used herein have the same meaning as commonly understood by one of ordinary skill in the art to which the disclosure belongs. The terms used herein are only for the purpose of describing the embodiments of the disclosure, and are not intended to limit the disclosure.

In the following description, the phrase "some embodiments" herein describes a subset of all possible embodiments. However, it is to be understood that "some embodiments" may be the same subset or different subsets of all possible embodiments, and may be combined with each other without conflict.

It is also notable that the terms "first/second/third" as used in the embodiments of the disclosure are only used to distinguish similar objects, and are not intended to imply a specific ordering or sequence for the objects. It is to be understood that "first/second/third" may be interchanged in a specific order or sequence where permitted, so that the embodiments of the disclosure described herein can be implemented in an order other than that illustrated or described herein.

It is understandable that audio-video synchronization is a very important indicator in the user's experience of watching videos. With the rapid development and continuous advancement of image processing technology, audio processing technology, and terminal technology, electronic devices such as mobile phones and tablet computers are all equipped with audio-video playback functions, and have become commonly used audio-video playback devices for users.

Audio-video devices can not only perform audio-video playback, but also implement video calls or online live broadcasts using cameras and microphones. In this process, audio-video playback delays may deviate due to network jitter and inconsistent strategies of the devices for combating jitter or other reasons. When the deviation therebetween exceeds a certain range, audio-video synchronization adjustment is required.

In a possible implementation, with a logical clock as a reference, the start times of an audio frame group are synchronized and the start times of a video frame group are synchronized. The audio device uses the logical clock as a reference, and adaptively adjusts the processing frequency of the frame group. The video device adaptively adjusts the processing frequency of the frame group, based on the logical clock and the audio clock. Without introducing a third-party device or professional transmission lines, multi-device synchronization within a local area network is achieved. Smooth processing of audio playback delay can effectively reduce the probability of frame dropping or fast-forwarding, which is consistent with the video. However, in this implementation, synchronization is performed at the frame group granularity among multiple devices to reduce the overall communication volume, and the frequency is adaptively adjusted within the frame group, to evenly distribute the time across multiple frames and further effectively reducing the probability of fast-forwarding or visual artifacts.

In the embodiments of the disclosure, the best effect of audio-video synchronization is implemented through frame-by-frame synchronization; otherwise, the user could immediately perceive audio-video asynchronization, and the optimal effect cannot be achieved. However, the above implementation performs synchronization at the frame group granularity, and the audio/video frames within the frame group do not refer to the playback progress of other devices; therefore, when a first frame of a same frame group is not synchronized among different devices, it is difficult for this implementation to make timely adjustments, resulting in a relatively long period of asynchronization among different devices. In practical scenarios, the synchronization effect of such implementation is poor.

In another possible implementation, an audio-video data unit carrying timestamp and a synchronization report instruction carrying a reporting period may be sent to multiple receiving terminals. Synchronization reports fed back by the individual receiving terminals according to the timestamp in the audio-video data unit and the synchronization report instruction are received. Synchronization adjustment parameters are respectively generated according to the timestamp of the sent audio-video data unit and the synchronization reports fed back by the individual receiving terminals, and are respectively sent to the individual receiving terminals. This enables multiple receiving terminals to synchronously play the audio-video data units.

In this implementation, each receiving terminal feeds back the current playback progress, and the sending terminal dynamically adjusts, after performing calculation, the playback speeds of all receiving terminals. This implementation apparently has a lag in regulation (the lag time is the statistical period of the synchronization report + the transmission delay of the synchronization report + the transmission delay of the adjustment parameters), i.e., the asynchronization of a previous synchronization cycle is not adjusted until the next cycle.

That is to say, although there are already many audio-video synchronization solutions in the related art, the existing solutions are not comprehensive in consideration and still have some defects. For example, it is difficult to achieve audio-video synchronization among multiple devices under a local area network, the current synchronization effect is not good, and many solutions can only barely reach an acceptable standard or are even not practical. In addition, most solutions of the related art do not consider the impact of audio latency. The audio latency refers to a delay from a moment at which audio data is sent to the player to a moment at which sound is output from the speaker, which is generally around 110 ms. The video rendering consumption time (from a moment at which data is written to the display system to a moment at which the display system actually renders the picture) is generally around 10 ms. There is an error of about 100 ms therebetween. Moreover, most solutions of the related art adjust the playback speed based on the playback progress of the receiving terminal, which causes a problem of regulation lag, resulting in unsatisfactory audio-video synchronization across multiple device terminals and poor performance.

In view of this, the embodiments of the disclosure provide an audio-video synchronization method, which method detects/probes communication delays in real time based on communication between a sending device and multiple receiving devices, determines a target communication delay applicable to the multiple receiving devices, and then covers the communication delay with a determined playback delay. It can stably control the audio-video synchronization, ensure smooth playback, and improve resistance to network jitter. In addition, the media data frame sent by the sending device directly carries the playback delay, which enables timely regulation of the multiple receiving devices to achieve audio-video synchronization across the multiple devices. Moreover, the receiving devices do not need to depend on each other, which prevents a significant increase in interaction/computation overhead as the number of receiving devices increases. This technical solution also does not require the introduction of additional hardware, it is simple to implement, and has low cost. While supporting simultaneous audio-video playback on multiple devices, it improves the audio-video synchronization effect.

The embodiments of the disclosure will be described in detail below with reference to the drawings.

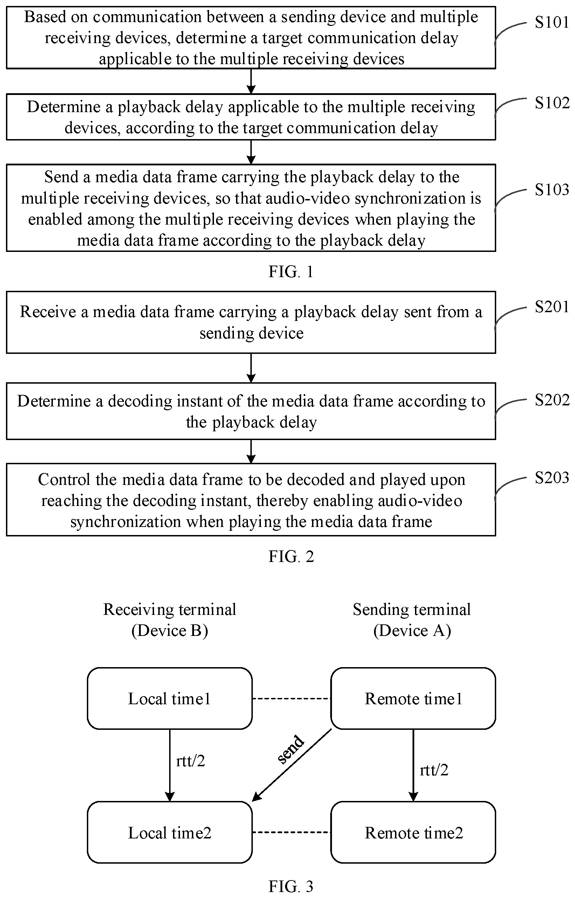

In an embodiment of the disclosure, FIG. 1 is a first schematic flowchart of an audio-video synchronization method provided by the embodiments of the disclosure. As illustrated in FIG. 1, the method may include operations as follows.

S101, based on communication between a sending device and multiple receiving devices, a target communication delay applicable to the multiple receiving devices is determined.

In the embodiments of the disclosure, the method may be applied to/implemented by an audio-video synchronization apparatus or an electronic device integrated with such apparatus. Here, the electronic device may be the sending device, which may also be referred to as a "sending terminal" or "source terminal". Correspondingly, the electronic device interacting with the sending terminal may be the receiving device, which may also be referred to as a "receiving terminal" or "destination terminal (sink terminal)".

In the embodiments of the disclosure, in order to achieve the best effect of the current audio-video synchronization standard, such as the standard of -100 ms to 20 ms which is imperceptible to user, a communication delay detection module may be used to detect the communication delays in real time.

It is understandable that the communication delays may be measured by sending a first probe packet. In some embodiments, the method may include: sending a first probe packet to the multiple receiving devices; receiving multiple pieces of first response information respectively returned by the multiple receiving devices; and determining individual probe/detected communication delays between the sending device and the multiple receiving devices, based on a sending time of the first probe packet and reception times of the multiple pieces of first response information.

In the embodiments of the disclosure, the first probe packet is a communication delay probe packet. The probe communication delay may be represented by Round-Trip Time (RTT), which is a time from a moment at which the sending terminal sends the communication delay probe packet to a moment at which the sending terminal receives the response information from the receiving terminal.

In addition, in the embodiments of the disclosure, RTT is one of the important indicators for measuring network transmission performance, and it can reflect the speed and stability of media data transmission over the network. Generally, the shorter the RTT, the faster the speed of network transmission, and vice versa. Therefore, in order to improve resistance to network jitter, the communication delays are detected in real time, so as to facilitate offsetting/counteracting, through the subsequent playback delay, the interference of different communication delays between the sending terminal and different receiving terminals on audio-video synchronization.

In this way, the sending terminal first sends a communication delay probe packet to the multiple receiving terminals, and then the multiple receiving terminals immediately reply with response information to the sending terminal. In this case, the time difference between the reception time at which the sending terminal receives a piece of response information and the sending time at which the probe packet is sent is the probe communication delay between the sending terminal and a respective one of the multiple receiving terminals.

It is also understandable that, in order to obtain the target communication delay applicable to the multiple receiving terminals, statistics may be performed on the probe communication delays within a period of time. In some embodiments, determining the target communication delay applicable to the multiple receiving devices may include: performing statistics on probe communication delays between the sending device and each of the multiple receiving devices within a preset time period, and determining an average communication delay for each of the multiple receiving devices within the preset time period; and determining the target communication delay according to the average communication delays of the multiple receiving devices.

In the embodiments of the disclosure, the preset time period may be a pre-set statistical time for determining the average communication delay of each receiving terminal. For example, the preset time period may be set to 1 second.

In the embodiments of the disclosure, the average communication delay may be represented by rtt_sink_aver_n, and the target communication delay may be represented by rtt_target. If there are N receiving terminals, n=1, 2, ... N. That is, after obtaining the average communication delay rtt_sink_aver_n of each of the N receiving terminals, the target communication delay rtt_target applicable to all receiving terminals may be determined according to the N rtt_sink_aver_n values.

For example, for each of the multiple receiving terminals, the sending terminal may perform statistics on the probe communication delays between the sending terminal and the multiple receiving terminals within the last one second. Taking a certain receiving terminal as an example, the sending terminal obtains the probe communication delays between the sending terminal and this receiving terminal within the last one second, and then averages the multiple probe communication delays to obtain the average communication delay of this receiving terminal. By analogy, the average communication delays of the multiple receiving terminals may be obtained. Then, the target communication delay rtt_target is determined based on these multiple average communication delays.

It is notable that the target communication delay rtt_target can accommodate the communication delays of all receiving terminals (in fact, the communication delay for unidirectional data transmission is approximately equal to rtt/2, but here redundant/excessive processing is performed for network jitter).

In some embodiments, determining the target communication delay according to the average communication delays of the multiple receiving devices may include: determining a maximum average communication delay among the multiple average communication delays, as the target communication delay; or determining a median average communication delay among the multiple average communication delays, as the target communication delay; or determining an average value of the multiple average communication delays, as the target communication delay.

That is to say, in the embodiments of the disclosure, the target communication delay may be determined as the maximum value, the median value, or the average value of the multiple average communication delays, or even a percentile value of the multiple average communication delays, which is not limited herein.

In addition, the target communication delay may be set according to actual requirements. For example, if the user desires all receiving terminals to keep up with synchronized playback, the target communication delay may be set to the maximum value; if the user desires the playback delays of all receiving terminals to be in a compromised state, the target communication delay may be set to the average value.

In a possible implementation, for the first one media data frame, the target communication delay may be selected as the maximum value of rtt_sink_aver_n; and for subsequent media data frames, the average/median/maximum/percentile value of rtt_sink_aver_n may be selected according to actual requirements.

S102, a playback delay applicable to the multiple receiving devices is determined according to the target communication delay.

In the embodiments of the disclosure, by dynamically setting the magnitude of the playback delay, the interference of different communication delays between the sending terminal and different receiving terminals on audio-video synchronization can be offset/counteracted.

In some embodiments, determining, according to the target communication delay, the playback delay applicable to the multiple receiving devices may include: determining a maximum audio delay and a preset processing delay of the multiple receiving devices; and performing a summation operation on the target communication delay, the maximum audio delay, and the preset processing delay, thereby determining the playback delay applicable to the multiple receiving devices.

In the embodiments of the disclosure, the playback delay may be represented by playout_delay, the maximum audio delay may be represented by audio_latency_max, and the preset processing delay may be represented by process_time. The playback delay playout_delay is calculated as follows: $playout _ delay = rtt _ target + audio _ latency _ max + process _ time$ (1)

Here, the maximum audio delay audio_latency_max represents the maximum audio_latency among all receiving terminals, where audio_latency refers to a delay from a moment at which audio data is sent to the player to a moment at which sound is output from the speaker, which is generally around 110 ms. If a receiving device cannot obtain an accurate audio_latency, an estimated value may be provided based on the chip platform type/model of the receiving device.

The preset processing delay process_time represents a redundant/excessive value provided for the media data processing flow, decoding consumption time, etc. For example, the default value of the preset processing delay is 50 ms.

It is understandable that, in order to avoid excessive fluctuations in the playback delay playout_delay caused by network fluctuations, and thus avoid stuttering in audio-video playback that would be caused by such excessive fluctuations, in some embodiments, the method may further include: setting a variation amplitude of the playback delay within a preset time interval to not exceed a first threshold.

In the embodiments of the disclosure, assuming the preset time interval is 1 second and the first threshold is 100 ms, the variation amplitude of playout_delay should be less than 100 ms/s. That is, in order to avoid excessive fluctuations in the playback delay playout_delay, the sending terminal may limit the variation amplitude of the playback delay, i.e., an upper limit needs to be set for the variation of playout_delay. For example, the variation per second is less than 100 ms/s.

S103, a media data frame carrying the playback delay is sent to the multiple receiving devices, so that audio-video synchronization is enabled among the multiple receiving devices when playing the media data frame according to the playback delay.

In the embodiments of the disclosure, after the playback delay is determined, when the sending terminal sends a media data frame to the multiple receiving terminals, the media data frame carries the playback delay, so that the multiple receiving terminals can achieve audio-video synchronization when playing the media data frame. It is notable that, if there is only one receiving device (i.e., one receiving terminal), after the playback delay for this receiving terminal is determined based on the communication delay between the sending terminal and this receiving terminal, the media data frame carrying the playback delay is sent to this receiving terminal, this can also enable audio-video synchronization when this receiving terminal plays the media data frame.

In the embodiments of the disclosure, in addition to carrying the playback delay, the media data frame also carries an absolute capture time (which is denoted as abs-capture-time) of the media data frame, so that each receiving terminal may calculate in real time a time interval from the capture time of the frame to the current moment, thereby precisely controlling the rendering time of the frame, so as to achieve simultaneous playback of audio and video among the multiple devices. Here, the absolute capture time is based on the clock of the sending terminal, which is a time at which the sending terminal captures (obtains) the raw media data (before encoding).

In the embodiments of the disclosure, the playback delay and the absolute capture time may specifically be written in the header extension fields of a Real-Time Transport Protocol (RTP) media data packet. For example, two RTP extension fields are used herein: one of the fields is abs-capture-time, which is used to add the absolute capture time in the RTP packet, providing a timestamp to help the receiving terminal calculate network delay and clock synchronization, etc.; and the other of the fields is playout_delay, which is used to transmit information on the playback delay to help the receiving terminal get synchronized during audio-video playback.

The embodiments of the disclosure provide an audio-video synchronization method. At the sending terminal, based on communication with multiple receiving devices, a target communication delay applicable to the multiple receiving devices is determined; according to the target communication delay, a playback delay applicable to the multiple receiving devices is determined; and a media data frame carrying the playback delay is sent to the multiple receiving devices, so that the multiple receiving devices can achieve audio-video synchronization when playing the media data frame according to the playback delay. In this way, based on the communication delays detected in real time based on communication between the sending terminal and the multiple receiving terminals, the target communication delay applicable to the multiple receiving terminals is determined, and then the communication delays are covered by the determined playback delay. It can stably control the audio-video synchronization, ensure smooth playback, and improve resistance to network jitter. In addition, the media data frame sent by the sending terminal directly carries the playback delay, which enables timely regulation of the multiple receiving terminals, thereby achieving audio-video synchronization across the multiple devices, and also improving the audio-video synchronization effect.

In another embodiment of the disclosure, FIG. 2 is a second schematic flowchart of an audio-video synchronization method provided by the embodiments of the disclosure. As illustrated in FIG. 2, the method may include operations as follows.

S201, a media data frame carrying a playback delay sent from a sending device is received.

In the embodiments of the disclosure, this method may be applied to/implemented by an audio-video synchronization apparatus or an electronic device integrated with such apparatus. Here, the electronic device may be a receiving device, which may also be referred to as a "receiving terminal" or "destination terminal (sink terminal)". Correspondingly, the electronic device interacting with the receiving terminal may be the sending device, which may also be referred to as a "sending terminal" or "source terminal".

In the embodiments of the disclosure, multiple receiving devices may independently perform calculation and rendering, without depending on/influencing each other. Taking one of the receiving devices as an example, this receiving terminal may receive a media data frame sent by the sending terminal, where the media data frame carries a playback delay. According to the playback delay, the decoding instant of the media data frame may be calculated in real time, so that playback may be performed immediately after the playback delay is reached.

S202, a decoding instant of the media data frame is determined according to the playback delay.

S203, the media data frame is controlled to be decoded and played upon reaching the decoding instant, thereby enabling audio-video synchronization when playing the media data frame.

In the embodiments of the disclosure, since data is sent for playback immediately after being decoded in Web Real-Time Communication (WebRTC), the specific implementation in WebRTC may be that the time instant at which the media data frame is sent for decoding is controlled. In some embodiments, determining the decoding instant of the media data frame according to the playback delay may include: obtaining a current delay, a decoding consumption time (which means a time consumed for decoding), and a rendering consumption time (which means a time consumed for rendering) of the media data frame; and determining the decoding instant of the media data frame, according to the playback delay, the current delay, the decoding consumption time, and the rendering consumption time.

It is notable that the current delay may be represented by cur_delay, the decoding consumption time may be represented by decode_time, and the rendering consumption time may be represented by render_time. Therefore, the decoding instant of the media data frame is specifically calculated as follows: $Decoding instant = playout _ delay - cur _ delay - decode _ time - render _ time$ (2)

Here, cur_delay represents the current real-time delay of the media data frame, which may be calculated in real time based on the abs-capture-time in the RTP media data packet. decode_time represents the predicted decoding consumption time of the media data frame. Here, the 95th percentile of the decoding consumption time of all decoded audio data frames or video data frames may be selected. render_time represents the rendering consumption time of the media data frame, i.e., the consumption time from a moment at which the frame is written to the system interface to a moment at which the system actually plays/outputs sound. For example, for an audio data frame, it is audio_latency, which may be for example 110 ms; and for a video data frame, the default value may be 10 ms.

In some embodiments, obtaining the current delay of the media data frame may include: obtaining an absolute capture time carried in the media data frame; and determining the current delay of the media data frame, according to the absolute capture time, a local time of the receiving device, and a clock synchronization difference between the sending device and the receiving device.

In the embodiments of the disclosure, since the clock of the sending terminal and the clock of the receiving terminal may not be synchronized, it also needs to determine the clock synchronization difference between the sending device and the receiving device. Then, according to the absolute capture time, the local time of the receiving device, and the clock synchronization difference between the sending device and the receiving device, a time interval between the current moment and the capture moment of the media data frame may be determined, i.e., the current delay of the media data frame may be determined.

It is understandable that the time synchronization between the sending terminal and the receiving terminal may be implemented by a soft clock synchronization module. In some embodiments, the method may further include: determining a probe communication delay corresponding to a second probe packet; when the probe communication delay is lower than a second threshold, receiving the second probe packet sent from the sending device, the second probe packet carrying a sending time of the sending device; and determining the clock synchronization difference between the sending device and the receiving device, according to a reception time at which the receiving device receives the second probe packet and the sending time.

In the embodiments of the disclosure, the second probe packet may be a clock synchronization probe packet, which relies on a high-precision clock for time synchronization between devices. FIG. 3 is a schematic diagram illustrating the clock synchronization principle between a sending terminal and a receiving terminal provided by the embodiments of the disclosure.

As illustrated in FIG. 3, the sending terminal (Device A) sends a second probe packet carrying a sending time to the receiving terminal (Device B). After receiving the second probe packet, the receiving terminal (Device B) immediately replies with second response information to the sending terminal (Device A).

As illustrated in FIG. 3, the time at the receiving terminal may be represented by local time, and the time at the sending terminal may be represented by remote time. The relationship between the two is expressed as follows: $local time 1 + A = remote time 1$ (3) $local time 2 - local time 1 = rtt / 2$ (4)

From expressions (3) and (4), the following expression may be obtained: $A = remote time 1 - local time 2 + rtt / 2$ (5)

Here, A represents the clock synchronization difference between the sending terminal and the receiving terminal. In this way, at any given time, its corresponding time at the sending terminal that is calculated in real time on the receiving terminal may be: local time + A.

For the clock synchronization error, the maximum error may be rtt/2. In order to improve the clock precision error, it needs to continuously use the clock synchronization probe packet for detection to determine the corresponding probe communication delay. Specifically, the second probe packet is sent to the receiving terminal; the second response information from the receiving terminal is received; and the probe communication delay RTT between the sending terminal and the receiving terminal is determined based on the sending time of the second probe packet and the reception time of the second response information.

For example, assuming the second threshold is 20 ms, i.e., the clock precision error is less than 10 ms, in order to meet the accuracy of 10 ms, continuous detection and calculation are required until a certain probe communication delay RTT is less than 20 ms.

It is notable that, although the soft clock solution is not the focus of audio-video synchronization, it may affect the effect of audio-video synchronization. Therefore, the embodiments of the disclosure may also provide a soft clock synchronization solution of higher precision, so as to more precisely control the playback delay/playback time of multiple terminals.

It is also understandable that the media data frame may include a video data frame and an audio data frame, and the decoding instant of the media data frame may include a first decoding instant of the video data frame and a second decoding instant of the audio data frame. In some embodiments, controlling the media data frame to be decoded and played upon reaching the decoding instant may include: controlling the video data frame to be decoded and played upon reaching the first decoding instant, and controlling the audio data frame to be decoded and played upon reaching the second decoding instant, thereby enabling audio-video synchronization when playing the media data frame.

In the embodiments of the disclosure, a video decoding consumption time and a video rendering consumption time of the video data frame may be obtained, and then the first decoding instant of the video data frame is determined, according to the playback delay, the current delay, the video decoding consumption time, and the video rendering consumption time.

In a specific embodiment, a subtraction operation may be performed based on the playback delay, the current delay, the video decoding consumption time, and the video rendering consumption time to determine the first decoding instant of the video data frame, specifically as illustrated in expression (2).

In the embodiments of the disclosure, an audio decoding consumption time and an audio rendering consumption time of the audio data frame may be obtained, and then the second decoding instant of the audio data frame is determined, according to the playback delay, the current delay, the audio decoding consumption time, and the audio rendering consumption time.

In a specific embodiment, a subtraction operation may be performed based on the playback delay, the current delay, the audio decoding consumption time, and the audio rendering consumption time to determine the second decoding instant of the audio data frame, specifically as illustrated in expression (2).

In this way, in the adaptive playback module of the receiving terminal, the receiving terminal calculates the delay of a certain media data frame in real time, and sends it for playback immediately after the playback delay is reached. Specifically, the media data frame may be controlled in such a manner that the video data frame is decoded and played upon reaching the first decoding instant, and the audio data frame is decoded and played upon reaching the second decoding instant, thereby achieving synchronized audio-video playback.

It is also notable that, in the embodiments of the disclosure, for playback at the receiving terminal, it may wait first, and then decode and play the frame immediately after the decoding instant is reached; alternatively, it may decode first, and then play immediately after waiting the elapse of the playback delay, which is not limited herein.

It is also understandable that, when network fluctuations cause the current delay cur_delay of a media data frame to be greater than the playback delay playout_delay, that is, the media data frame should have been played but has not been played, two simple processing methods are provided herein: frame dropping or accelerated playback.

In some embodiments, the method may include: when the current delay is greater than the playback delay, determining a timeout time between the current delay and the playback delay; and determining a processing mode for the media data frame according to a comparison between the timeout time and a third threshold.

In a specific embodiment, when the timeout time is greater than the third threshold, frame dropping processing is performed on the media data frame; and when the timeout time is less than the third threshold, accelerated playback processing is performed on the media data frame.

That is, in the embodiments of the disclosure, a timeout threshold (i.e., the third threshold) may be set, which is used to measure the amount by which the current delay cur_delay exceeds the playback delay playout_delay.

For example, when the timeout time is less than this threshold, accelerated playback is performed until a subsequent frame can be played on time; and when the timeout time is greater than the threshold, frame dropping is performed. If the timeout time is equal to this threshold, accelerated playback may be performed, or frame dropping may be performed.

In a specific embodiment, if the third threshold is set to 0, it means that only frame dropping processing is performed; and if the third threshold is set to infinity, it means that only accelerated playback is performed. For example, the default value of the third threshold may be 1000 ms.

The embodiments of the disclosure provide an audio-video synchronization method. At the receiving terminal, a media data frame carrying a playback delay sent from a sending device is received; a decoding instant of the media data frame is determined according to the playback delay; and the media data frame is controlled to be decoded and played upon reaching the decoding instant, thereby enabling audio-video synchronization when playing the media data frame. In this way, the media data frame sent by the sending device directly carries the playback delay, which enables timely regulation of the multiple receiving devices, thereby achieving audio-video synchronization across multiple devices. Furthermore, the receiving devices do not need to depend on each other, which prevents a significant increase in interaction/computation overhead as the number of receiving devices increases. In addition, the technical solution does not require the introduction of additional hardware, it is simple to implement, and has low cost. While supporting simultaneous audio-video playback on multiple devices, it also improves the audio-video synchronization effect.

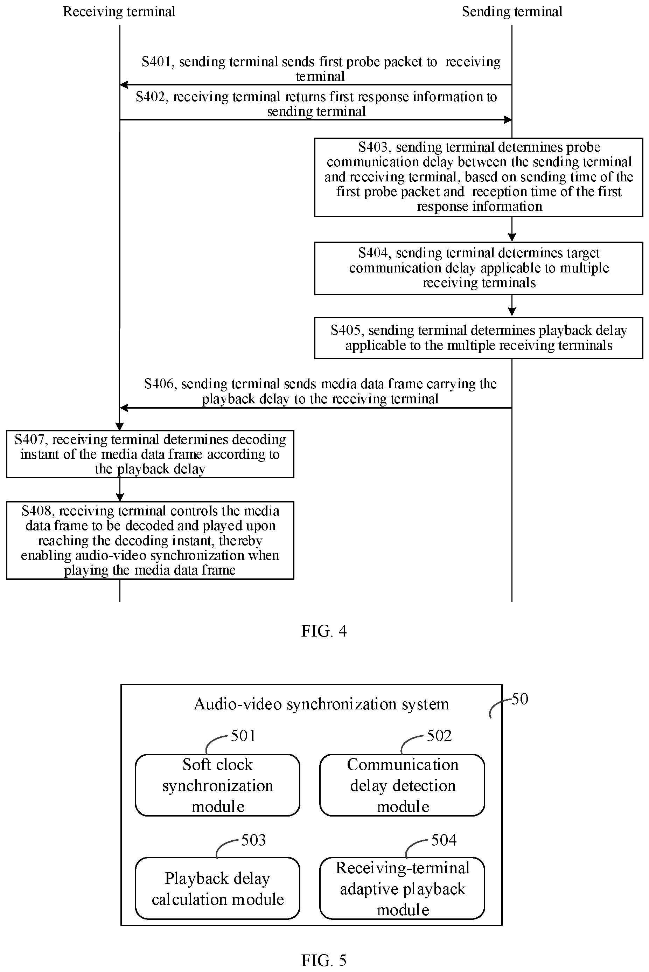

In yet another embodiment of the disclosure, FIG. 4 is a detailed schematic flowchart of the audio-video synchronization method provided by the embodiments of the disclosure. As illustrated in FIG. 4, the detailed flow may include operations as follows.

S401, the sending terminal sends a first probe packet to the receiving terminal.

S402, the receiving terminal returns first response information to the sending terminal.

S403, the sending terminal determines a probe communication delay between the sending terminal and the receiving terminal, based on the sending time of the first probe packet and the reception time of the first response information.

S404, the sending terminal determines a target communication delay applicable to multiple receiving terminals.

In the embodiments of the disclosure, the sending terminal may perform statistics on the probe communication delays obtained by performing operations S401 to S403 within a preset time period, and calculate the corresponding average communication delay. Then, the target communication delay applicable to the multiple receiving terminals is determined according to the average communication delays of the multiple receiving terminals.

For example, the target communication delay applicable to the multiple receiving terminals may be determined based on the maximum value/median value/average value/percentile value among the average communication delays of the multiple receiving terminals.

S405, the sending terminal determines a playback delay applicable to the multiple receiving terminals.

In the embodiments of the disclosure, after the target communication delay is determined, a summation operation may be performed on the target communication delay, the maximum audio delay, and the preset processing delay to determine the playback delay applicable to the multiple receiving devices, specifically as illustrated in expression (1). In this way, by dynamically setting the magnitude of the playback delay, the interference of different communication delays between the sending terminal and different receiving terminals on audio-video synchronization can be offset/counteracted.

S406, the sending terminal sends a media data frame carrying the playback delay to the receiving terminal.

S407, the receiving terminal determines the decoding instant of the media data frame according to the playback delay.

S408, the receiving terminal controls the media data frame to be decoded and played upon reaching the decoding instant, thereby enabling audio-video synchronization when playing the media data frame.

In the embodiments of the disclosure, the receiving terminal calculates the delay of the media data frame in real time, and determines the decoding instant at which the media data frame is sent for decoding, specifically, as illustrated in expression (2). In this way, the decoded audio-video data is immediately sent for playback, thereby achieving audio-video synchronization and also achieving the best effect meeting the current audio-video synchronization standard. Here, the multiple receiving terminals independently perform calculation and rendering, without depending on/influencing each other.

FIG. 5 is a first schematic structural diagram of an audio-video synchronization system provided by the embodiments of the disclosure. As illustrated in FIG. 5, the audio-video synchronization system 50 may include a soft clock synchronization module 501, a communication delay detection module 502, a playback delay calculation module 503, and a receiving-terminal adaptive playback module 504.

In the embodiments of the disclosure, the soft clock synchronization module 501 may be provided on the sending terminal and/or the receiving terminal. The communication delay detection module 502 and the playback delay calculation module 503 may be provided on the sending terminal. The receiving-terminal adaptive playback module 504 may be provided on the receiving terminal. These four modules are respectively described below.

In the embodiments of the disclosure, the soft clock synchronization module 501 is used to synchronize the times of all receiving terminals with the sending terminal, with a clock precision error less than 10 ms.

In the embodiments of the disclosure, the communication delay detection module 502 is used by the sending terminal to detect/probe the communication delays in real time, so as to set the playback delay of audio-video frames.

In the embodiments of the disclosure, for the playback delay calculation module 503, the playback delay is a duration from the capture time of a media frame to a moment at which the media frame is allowed to be played. The sending terminal calculates, based on the communication delays RTT with different receiving terminals, a playback delay of the media data frame that is applicable to all receiving terminals, and writes it in the header extension fields of the RTP media data packet. Two RTP extension fields are provided herein: one of the fields is for abs-capture-time, which is used to carry the absolute capture time of the audio-video frame, so that each receiving terminal can calculate in real time the time interval from the capture time of the frame to the current moment, to precisely control the rendering time of the frame; and the other of the fields is for playout_delay, which is used to carry the playback delay of the audio-video frame, that is, the frame can be rendered only after a delay of at least x milliseconds from its capture time.

In the embodiments of the disclosure, for the receiving-terminal adaptive playback module 504, the receiving terminal calculates the delay of a certain media frame in real time, and sends it for playback immediately after the playback delay has elapsed (each receiving terminal independently performs calculation and rendering, without depending on/influencing each other).

It is understandable that, taking the International Telecommunication Union "ITU-R BT.1359-1" as an example, the audio-video synchronization (lip-sync) solution is described as follows: imperceptible, -100 ms to 25 ms; perceptible, -125 ms to 45 ms; acceptable, -185 ms to 90 ms. Here, negative values indicate that the picture is ahead of the sound, and positive values indicate that the sound is ahead of the picture.

With reference to FIG. 4 and FIG. 5, the specific process of the technical solution is described below.

### (1) Soft clock synchronization module

This technical solution relies on a high-precision clock for time synchronization between devices. One of the implementations is briefly introduced herein (as illustrated in FIG. 3): Device A sends a probe packet carrying a sending time to Device B; and after receiving the probe packet, Device B immediately replies with a response to Device A.

For any given time, its corresponding time at the sending terminal that is calculated in real time at the receiving terminal is: local time + A.

It is notable that the maximum error of this technical solution is rtt/2. In order to achieve the accuracy of 10 ms, continuous detection and calculation are required until the RTT of a certain probe packet is less than 20 ms.

### (2) Communication delay detection module

This technical solution dynamically sets the amplitude of the playback delay to offset the interference of different communication delays between the sending terminal and different receiving terminals on lip-sync.

Here, the sending terminal obtains, through statistics, the average communication delay rtt_sink_aver_n between the sending terminal and each of N receiving terminals within the last one second, and calculates rtt_target applicable to all receiving terminals based on the N rtt_sink_aver_n values, thereby dynamically adjusting playout_delay.

Here, rtt_target accommodates the communication delays of all receiving terminals (in fact, the delay for unidirectional data transmission is approximately rtt/2, but redundant/excessive processing is performed for network jitter here). For example, for the first one audio-video frame, the value may be the maximum rtt_sink_aver_n; and for subsequent audio-video frames, the average/median/maximum/percentile value may be selected as needed. Alternatively, for the first one frame, the maximum value may be selected; and for subsequent frames, the value may gradually decrease to achieve smooth playback.

### (3) Playback delay calculation module

The playback delay is calculated as: playout_delay = rtt_target + audio_latency_max + process_time.

Here, audio_latency_max is the maximum audio_latency among all sink terminals (audio_latency refers to the delay from a moment at which audio data is sent to the player to a moment at which sound is output from the speaker, which is generally around 110 ms; and when a device cannot obtain an accurate audio_latency, an estimated value may be provided based on the chip platform type/model of the device). process_time is a redundant/excessive value provided for the media data processing flow, decoding consumption time, etc., with a default value of 50 ms. It is notable that video rendering delay is not included here, that is because the video rendering delay is 10 ms and audio_latency is about 110 ms, and for the playback delay, it is sufficient to synchronously play the audio and video after 110 ms, without waiting for another 10 ms (i.e., playing after 120 ms).

In addition, it is notable that, in order to avoid excessive fluctuations in the playback delay playout_delay caused by extreme network fluctuations, and thus avoid stuttering in audio-video playback that would be caused by such excessive fluctuations, a maximum value is set for the variation amplitude of playout_delay. For example, the variation thereof per second is less than 100 ms/s.

### (4) Receiving-terminal adaptive playback module

The receiving terminal calculates the delay of a certain media data frame in real time, and sends it for playback immediately after the playback delay is reached. Each receiving terminal independently performs calculation and rendering, without depending on/influencing other receiving terminals.

In the embodiments of the disclosure, since data is sent for playback immediately after being decoded in WebRTC, the specific implementation of this technical solution in WebRTC is to control the time instant at which the media data frame is sent for decoding (i.e., the decoding instant): decoding instant = playout_delay - cur_delay - decode_time - render_time. It is notable that, for WebRTC meaning Web Real-Time Communication, it may refer to the WebRTC standard, and in this technical solution, it specifically refers to the WebRTC standard and its open-source technical framework.

In the embodiments of the disclosure, cur_delay represents the current real-time delay of the frame, which may be calculated in real time based on the abs-capture-time in the RTP data packet. decode_time represents a predicted decoding consumption time of the frame. Here, the 95th percentile of the decoding consumption time of all decoded audio or video frames may be selected. render_time represents the rendering consumption time, i.e., the time from a moment at which the frame is written to the system interface to a moment at which the system actually plays/outputs sound. For example, for an audio frame, it is audio_latency, which may be 110 ms; and for a video frame, the default value may be 10 ms.

In addition, when network fluctuations cause the current delay cur_delay of the media data frame to be greater than the playback delay playout_delay, that is, the media data frame should have been played but has not been played, this technical solution provides two simple processing methods: frame dropping or accelerated playback.

Specifically, a timeout threshold (the amount by which the current delay cur_delay exceeds the playback delay playout_delay) may be set. When the timeout time is less than the threshold, accelerated playback is performed until a subsequent frame can be played on time. When the timeout time exceeds the threshold, frame dropping is performed. If the threshold is set to 0, it means that only frame dropping is performed; and if the threshold is set to infinity, it means that only accelerated playback is performed. The default value of the timeout threshold may be 1000 ms.

At present, most lip-sync solutions can only barely achieve the acceptable standard (-185 ms to 90 ms). In the embodiments of the disclosure, since the sending terminal directly specifies the playback delay playout_delay for all audio-video frames, a small increase in delay offsets the communication delays among multiple devices, thereby ensuring the optimal cross-terminal lip-sync effect (at the imperceptible level: -100 ms to 25 ms) among multiple devices, which can meet the usage requirements in practical near-field scenarios. Moreover, this technical solution directly controls the playback delay of each frame, thereby controlling the lip-sync effect of multiple devices in advance without requiring feedback on the playback statuses of the receiving terminals, and enabling the best effect of the current lip-sync standard (the standard for user imperceptibility).

It is also understandable that a Selective Forwarding Unit (SFU) is a streaming media forwarding server suitable for multiple devices. Quality of Experience (QoE) refers to the user's subjective perception of the quality and performance of devices, networks, systems, applications, or services. In addition, the link layer is the second layer of the TCP/IP network protocol model, which protocol model consists of five layers from low to high: physical layer, link layer, network layer, transport layer, and application layer. The RTT in the related art is a network transmission indicator at the fourth layer (transport layer), generally, a single network transmits socket for a single application, and all sockets of all applications pass through the link layer, which may represent the transmission quality of the entire network.

It is also understandable that the soft clock is not the focus of this technical solution, but it may affect the lip-sync effect. A soft clock synchronization solution of higher precision may also be designed here, so as to more precisely control the playback delay/playback time of multiple terminals.

The embodiments of the disclosure provide an audio-video synchronization method. Through the above embodiments, the specific implementations of the previous embodiments have been described in detail. As can be seen therefrom, by dynamically controlling the playback delay of the media data frame to control lip-sync across multiple terminals, it truly supports simultaneous audio-video playback on multiple receiving terminals, without causing a significant increase in interaction/computation overhead as the number of devices increases. By detecting/probing the communication delays RTT in real time and then covering the communication delays with the playback delay, lip-sync can be stably controlled, the playback is smooth, and resistance to network jitter is improved. That is, through the technical solutions of the foregoing embodiments, the best effect of the current lip-sync standard (the standard for user imperceptibility: -100 ms to 20 ms) can be achieved. It truly supports simultaneous audio-video playback on multiple sink terminals, and does not cause a significant increase in interaction/computation overhead as the number of devices increases. The sink terminals do not need to depend on/refer to each other. The regulation is timely, as the sending terminal directly carries the playback delay in the media data frame when sending the frame, to control lip-sync at each receiving terminal. In addition, this technical solution is a pure software solution, which is simple to implement, has low implementation cost, and does not require the introduction of additional hardware. Furthermore, by detecting the communication delays in real time and covering the communication delays with the playback delay, lip-sync can be stably controlled, the playback is smooth, the resistance to network jitter is improved, and the audio-video synchronization effect is enhanced.

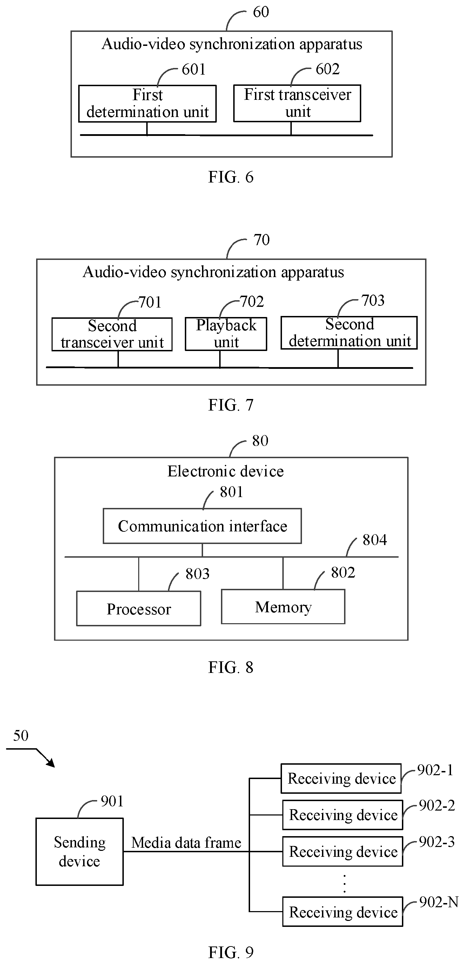

In yet another embodiment of the disclosure, based on the same inventive concept as the foregoing embodiments, FIG. 6 is a first schematic structural diagram of an audio-video synchronization apparatus provided by the embodiments of the disclosure. As illustrated in FIG. 6, the audio-video synchronization apparatus 60 is applied to/implemented in a sending device, and the audio-video synchronization apparatus 60 may include a first determination unit 601 and a first transceiver unit 602.

The first determination unit 601 is configured to determine, based on communication with multiple receiving devices, a target communication delay applicable to the multiple receiving devices, and determine, according to the target communication delay, a playback delay applicable to the multiple receiving devices.

The first transceiver unit 602 is configured to send, to the multiple receiving devices, a media data frame carrying the playback delay, so that audio-video synchronization is enabled among the multiple receiving devices when playing the media data frame according to the playback delay.

In some embodiments, the first determination unit 601 is further configured to: perform statistics on probe communication delays between the sending device and each of the multiple receiving devices within a preset time period, and determine an average communication delay for each of the multiple receiving devices with the preset time period; and determine the target communication delay according to the average communication delays of the multiple receiving devices.

In some embodiments, the first determination unit 601 is further configured to determine a maximum value among the multiple average communication delays, as the target communication delay; or determine a median value among the multiple average communication delays, as the target communication delay; or determine an average value of the multiple average communication delays, as the target communication delay.

In some embodiments, the first transceiver unit 602 is further configured to send a first probe packet to the multiple receiving devices, and receive first response information returned by each of the multiple receiving devices. The first determination unit 601 is further configured to determine the probe communication delays between the sending device and the multiple receiving devices, based on a sending time of the first probe packet and reception times of the multiple pieces of first response information.

In some embodiments, the first determination unit 601 is further configured to determine a maximum audio delay and a preset processing delay of the multiple receiving devices; and perform a summation operation on the target communication delay, the maximum audio delay, and the preset processing delay, thereby determining the playback delay applicable to the multiple receiving devices.

In some embodiments, the first determination unit 601 is further configured to set a variation amplitude of the playback delay within a preset time interval to not exceed a first threshold.

In yet another embodiment of the disclosure, based on the same inventive concept as the foregoing embodiments, FIG. 7 is a second schematic structural diagram of an audio-video synchronization apparatus provided by the embodiments of the disclosure. As illustrated in FIG. 7, the audio-video synchronization apparatus 70 is applied to/implemented in a receiving device, and the audio-video synchronization apparatus 70 may include a second transceiver unit 701, a playback unit 702, and a second determination unit 703.

The second transceiver unit 701 is configured to receive a media data frame carrying a playback delay sent from a sending device.

The playback unit 702 is configured to determine a decoding instant of the media data frame according to the playback delay, and control the media data frame to be decoded and played upon reaching the decoding instant, thereby enabling audio-video synchronization when playing the media data frame.

In some embodiments, the second determination unit 703 is further configured to obtain a current delay, a decoding consumption time, and a rendering consumption time of the media data frame, and determine the decoding instant of the media data frame, according to the playback delay, the current delay, the decoding consumption time, and the rendering consumption time.

In some embodiments, the second determination unit 703 is further configured to obtain an absolute capture time carried in the media data frame, and determine the current delay of the media data frame, according to the absolute capture time, a local time of the receiving device, and a clock synchronization difference between the sending device and the receiving device.

In some embodiments, the second determination unit 703 is further configured to determine a probe communication delay corresponding to a second probe packet. The second transceiver unit 701 is further configured to, when the probe communication delay is lower than a second threshold, receive the second probe packet sent by the sending device, the second probe packet carrying a sending time of the sending device. The second determination unit 703 is further configured to determine the clock synchronization difference between the sending device and the receiving device, according to a reception time at which the receiving device receives the second probe packet and the sending time.

In some embodiments, the decoding instant of the media data frame includes a first decoding instant of a video data frame and a second decoding instant of an audio data frame. Correspondingly, the playback unit 702 is further configured to control the video data frame to be decoded and played upon reaching the first decoding instant, and control the audio data frame to be decoded and played upon reaching the second decoding instant, thereby enabling audio-video synchronization when playing the media data frame.

In some embodiments, the second determination unit 703 is further configured to: obtain a video decoding consumption time and a video rendering consumption time of the video data frame, and obtain an audio decoding consumption time and an audio rendering consumption time of the audio data frame; perform a subtraction operation based on the playback delay, the current delay, the video decoding consumption time, and the video rendering consumption time to determine the first decoding instant of the video data frame; and perform a subtraction operation based on the playback delay, the current delay, the audio decoding consumption time, and the audio rendering consumption time to determine the second decoding instant of the audio data frame.

In some embodiments, the second determination unit 703 is further configured to, when the current delay is greater than the playback delay, determine a timeout time between the current delay and the playback delay. The playback unit 702 is further configured to, when the timeout time is greater than a third threshold, perform frame dropping processing on the media data frame; and when the timeout time is less than the third threshold, perform accelerated playback processing on the media data frame.

It is understandable that, in the embodiments, a "unit" may be a portion of a circuit, a portion of a processor, a portion of a program or software, etc., and may also be a module, or may be non-modular. Moreover, the components in the embodiments may be integrated into one processing unit, or each unit may physically exist separately, or two or more units may be integrated into one unit. The above integrated unit may be implemented in hardware or in the form of software functional modules.

If the integrated unit is implemented as software functional modules and sold or used as an independent product, it may be stored in a computer-readable storage medium. Based on this understanding, an essential part of the technical solution of the embodiments, or a part thereof that contributing to the prior art, or all or part of the technical solution, may be embodied in the form of a software product. The computer software product is stored in a storage medium, and includes several instructions for causing a computer device (which may be a personal computer, a server, or a network device, etc.) or a processor to perform all or part of the operations of the method described in the embodiments. The aforementioned storage medium includes: U disk, removable hard disk, Read Only Memory (ROM), Random Access Memory (RAM), magnetic disk, or optical disk, and other media that can store program codes.

Therefore, the embodiments provide a computer-readable storage medium having stored thereon a computer program. The computer program, when being executed by a processor, implements the operations of the method according to any one of the foregoing embodiments.

Based on the composition of the audio-video synchronization apparatus 60 or the audio-video synchronization apparatus 70 and the computer-readable storage medium, FIG. 8 is a specific hardware structural diagram of an electronic device provided by the embodiments of the disclosure. As illustrated in FIG. 8, the electronic device 80 may include a communication interface 801, a memory 802, and a processor 803. The components are coupled together via a bus system 804. It is understandable that the bus system 804 is used to implement connection and communication between these components. In addition to a data bus, the bus system 804 includes a power bus, a control bus, and a status signal bus. However, for clarity, various buses are labeled as the bus system 804 in FIG. 8. The communication interface 801 is used for sending and receiving signals in the process of sending and receiving information with other external network elements.

The memory 802 is configured to store a computer program executable on the processor 803.

The processor 803 is configured to, when executing the computer program, perform the operations of the method according to any one of the foregoing embodiments.

In a possible implementation, when the electronic device 80 is a sending device (sending terminal), the processor 803 is configured to, when executing the computer program, perform operations of: determining, based on communication with multiple receiving devices, a target communication delay applicable to the multiple receiving devices; determining, according to the target communication delay, a playback delay applicable to the multiple receiving devices; and sending, to the multiple receiving devices, a media data frame carrying the playback delay, thereby enabling audio-video synchronization among the multiple receiving devices when playing the media data frame according to the playback delay.

In a possible implementation, when the electronic device 80 is a receiving device (receiving terminal), the processor 803 is configured to, when executing the computer program, perform operations of: receiving a media data frame carrying a playback delay sent from a sending device; determining a decoding instant of the media data frame according to the playback delay; and controlling the media data frame to be decoded and played upon reaching the decoding instant, thereby enabling audio-video synchronization when playing the media data frame.

It is understandable that the memory 802 in the embodiments of the disclosure may be a volatile memory or a non-volatile memory, or may include both a volatile memory and a non-volatile memory. The non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which is used as an external cache. By way of example but not limitation, many forms of RAM are available, such as Static RAM (SRAM), Dynamic RAM (DRAM), Synchronous DRAM (SDRAM), Double Data Rate SDRAM (DDRSDRAM), Enhanced SDRAM (ESDRAM), Synchronous Link DRAM (SLDRAM), and Direct Rambus RAM (DRRAM). The memory 802 of the systems and methods described herein is intended to include, but is not limited to, these and any other suitable types of memory.

The processor 803 may be an integrated circuit chip with signal processing capabilities. In implementation, the operations of the above methods may be performed by hardware integrated logic circuits in the processor 803 or by instructions in the form of software. The above processor 803 may be a general-purpose processor, a Digital Signal Processor (DSP), an Application Specific Integrated Circuit (ASIC), a Field Programmable Gate Array (FPGA), or other programmable logic devices, discrete gate or transistor logic devices, or discrete hardware components. It may implement or execute the methods, operations, and logical block diagrams disclosed in the embodiments of the disclosure. A general-purpose processor may be a microprocessor, or the processor may be any conventional processor, etc. The operations of the methods disclosed in connection with the embodiments of the disclosure may be directly executed by a hardware decoding processor, or performed by a combination of hardware and software modules in the decoding processor. A software module may be located in a storage medium that is mature in the art, such as random access memory, flash memory, read-only memory, programmable read-only memory, or electrically erasable programmable memory, registers, etc. The storage medium is located in the memory 802, and the processor 803 reads the information in the memory 802 and performs the operations of the above methods in combination with its hardware.

It is also understandable that the embodiments described herein may be implemented in hardware, software, firmware, middleware, microcode, or a combination thereof. For hardware implementation, the processing unit may be implemented in one or more of Application Specific Integrated Circuit (ASIC), Digital Signal Processor (DSP), Digital Signal Processing Device (DSPD), Programmable Logic Device (PLD), Field-Programmable Gate Array (FPGA), general-purpose processor, controller, microcontroller, microprocessor, or other electronic units for performing the functions described in the disclosure, or a combination thereof.

For software implementation, the techniques described herein may be implemented by modules (e.g., procedures, functions, etc.) that perform the functions described herein. The software codes may be stored in the memory and executed by the processor. The memory may be implemented within the processor or external to the processor.

In yet another embodiment of the disclosure, FIG. 9 is a second schematic structural diagram of the audio-video synchronization system provided by the embodiments of the disclosure. As illustrated in FIG. 9, the audio-video synchronization system 50 may include a sending device 901 and N receiving devices (902-1, 902-2, ..., 902-N), where N is a positive integer.

In the embodiments of the disclosure, the sending device 901 may be the electronic device 80 or a device integrated with the audio-video synchronization apparatus 60, and each receiving device may also be the electronic device 80 or a device integrated with the audio-video synchronization apparatus 70. The sending device may interact with the N receiving devices.

In the embodiments of the disclosure, the sending device 901 sends a media data frame to the N receiving devices, and controls lip-sync across multiple device terminals by dynamically controlling the playback delay of the media data frame. This truly supports simultaneous audio-video playback on multiple receiving terminals, and does not cause a significant increase in interaction/computation overhead as the number of devices increases. By detecting the communication delays RTT in real time and then covering the communication delays with the playback delay, lip-sync can be stably controlled, the playback is smooth, and the resistance to network jitter is improved.

In yet another embodiment of the disclosure, the embodiments of the disclosure also provide a computer program product, including a computer program or instructions. The computer program or instructions, when being executed by a processor, implements the operations of the method according to any one of the foregoing embodiments.

Those skilled in the art will appreciate that the embodiments of the disclosure may be provided as methods, apparatuses, devices, or computer program products. Accordingly, the disclosure may take the form of a hardware embodiment, a software embodiment, or an embodiment combining software and hardware aspects. Furthermore, the disclosure may take the form of a computer program product embodied on one or more computer-usable storage media (including, but not limited to, disk storage and optical storage) containing computer-usable program codes.

The disclosure is described with reference to flowcharts and/or block diagrams of methods, devices (systems), and computer program products according to embodiments of the disclosure. It will be understood that each flow and/or block in the flowcharts and/or block diagrams, and combinations of flows and/or blocks in the flowcharts and/or block diagrams, may be implemented by computer program instructions. These computer program instructions may be provided to a processor of a general-purpose computer, a special-purpose computer, an embedded processor, or other programmable data processing device to produce a machine, such that the instructions executed by the processor of the computer or other programmable data processing device produce means for implementing the functions specified in one or more flows of the flowchart and/or one or more blocks of the block diagram.

These computer program instructions may also be stored in a computer-readable memory that can guide a computer or other programmable data processing device to operate in a specific manner, such that the instructions stored in the computer-readable memory produce an article of manufacture including instruction means that implement the functions specified in one or more flows of the flowchart and/or one or more blocks of the block diagram.

These computer program instructions may also be loaded onto a computer or other programmable data processing device, such that a series of operational steps are performed on the computer or other programmable device to produce computer-implemented processing, and the instructions executed on the computer or other programmable device provide operations for implementing the functions specified in one or more flows of the flowchart and/or one or more blocks of the block diagram.

It should be noted that, in the disclosure, the terms "comprise/include", "contain", or any other variation thereof are intended to cover non-exclusive inclusion, such that a process, method, article, or device that includes a series of elements includes not only those elements, but also other elements not explicitly listed, or elements that are inherent to such process, method, article, or device. Without further limitation, an element defined by the phrase "comprising/including a ..." does not exclude the presence of additional identical elements in the process, method, article, or device that includes the element.

The serial numbers of the above embodiments of the disclosure are for description purposes only, and do not represent the superiority or inferiority of the embodiments.

The methods disclosed in several method embodiments provided in the disclosure may be arbitrarily combined without conflict, to obtain new method embodiments.

The features disclosed in several product embodiments provided in the disclosure may be arbitrarily combined without conflict, to obtain new product embodiments.

The features disclosed in several method or device embodiments provided in the disclosure may be arbitrarily combined without conflict, to obtain new method embodiments or device embodiments.

The foregoing is only specific implementations of the disclosure, but the scope of protection of the disclosure is not limited thereto. Any person skilled in the art who is familiar with the technical field of the disclosure may readily conceive of changes or substitutions within the technical scope disclosed in the disclosure, and such changes or substitutions should fall within the scope of protection of the disclosure. Therefore, the scope of protection of the disclosure should be subject to the scope of protection of the claims.

### Industrial Applicability

In the embodiments of the disclosure, at the sending terminal, based on communication with multiple receiving devices, a target communication delay applicable to the multiple receiving devices is determined; according to the target communication delay, a playback delay applicable to the multiple receiving devices is determined; and a media data frame carrying the playback delay is sent to the multiple receiving devices, so that audio-video synchronization is enabled among the multiple receiving devices when playing the media data frame according to the playback delay. At the receiving terminal, the media data frame carrying the playback delay sent from a sending device is received; a decoding instant of the media data frame is determined according to the playback delay; and the media data frame is controlled to be decoded and played upon reaching the decoding instant, thereby enabling audio-video synchronization when playing the media data frame. In this way, based on real-time detection of the communication delays with the multiple receiving devices, the target communication delay applicable to the multiple receiving devices is determined, and then the communication delays are covered by the determined playback delay, thereby stably controlling audio-video synchronization, ensuring smooth playback, and improving resistance to network jitter. In addition, the media data frames sent by the sending device directly carry the playback delay, which enables timely regulation of the multiple receiving devices, thereby enabling audio-video synchronization across multiple devices; and in this case, the receiving devices do not need to depend on each other, which prevents a significant increase in interaction/computation overhead as the number of receiving devices increases. The technical solution also does not require the introduction of additional hardware, it is simple to implement, and has low cost. While supporting simultaneous audio-video playback on multiple devices, it also improves the audio-video synchronization effect.

## Claims

1. An audio-video synchronization method, implemented by a sending device, the method comprising:
determining, based on communication with a plurality of receiving devices, a target communication delay applicable to the plurality of receiving devices;
determining, according to the target communication delay, a playback delay applicable to the plurality of receiving devices; and
sending, to the plurality of receiving devices, a media data frame carrying the playback delay, so that audio-video synchronization is enabled among the plurality of receiving devices when playing the media data frame according to the playback delay.

2. The method as claimed in claim 1, wherein the determining, based on communication with the plurality of receiving devices, the target communication delay applicable to the plurality of receiving devices comprises:
performing statistics on probe communication delays between the sending device and each of the plurality of receiving devices within a preset time period, and determining an average communication delay for each of the plurality of receiving devices within the preset time period; and
determining the target communication delay, according to the average communication delays of the plurality of receiving devices.

3. The method as claimed in claim 2, wherein the determining the target communication delay according to the average communication delays of the plurality of receiving devices comprises:
determining, as the target communication delay, a maximum average communication delay among the plurality of average communication delays; or
determining, as the target communication delay, a median average communication delay among the plurality of average communication delays; or
determining, as the target communication delay, an average value of the plurality of average communication delays.

4. The method as claimed in claim 2, further comprising:
sending a first probe packet to the plurality of receiving devices;
receiving first response information returned by each of the plurality of receiving devices; and
determining the probe communication delay between the sending device and each of the plurality of receiving devices, based on a sending time of the first probe packet and a reception time of the first response information.

5. The method as claimed in claim 1, wherein the determining, according to the target communication delay, the playback delay applicable to the plurality of receiving devices comprises:
determining a maximum audio delay and a preset processing delay of the plurality of receiving devices; and
determining the playback delay applicable to the plurality of receiving devices, by performing a summation operation on the target communication delay, the maximum audio delay, and the preset processing delay.

6. The method as claimed in any one of claims 1 to 5, further comprising:
setting a variation amplitude of the playback delay within a preset time interval to not exceed a first threshold.

7. An audio-video synchronization method, implemented by a receiving device, the method comprising:
receiving a media data frame carrying a playback delay sent from a sending device;
determining a decoding instant of the media data frame, according to the playback delay; and
controlling the media data frame to be decoded and played upon reaching the decoding instant, thereby enabling audio-video synchronization when playing the media data frame.

8. The method as claimed in claim 7, wherein the determining the decoding instant of the media data frame according to the playback delay comprises:
obtaining a current delay, a decoding consumption time, and a rendering consumption time of the media data frame; and
determining the decoding instant of the media data frame, according to the playback delay, the current delay, the decoding consumption time, and the rendering consumption time.

9. The method as claimed in claim 8, wherein the determining the decoding instant of the media data frame according to the playback delay, the current delay, the decoding consumption time, and the rendering consumption time comprises:
determining the decoding instant of the media data frame, by performing a subtraction operation on the current delay, the decoding consumption time, and the rendering consumption time based on the playback delay.

10. The method as claimed in claim 8, wherein the obtaining the current delay of the media data frame comprises:
obtaining an absolute capture time carried in the media data frame; and
determining the current delay of the media data frame, according to the absolute capture time, a local time of the receiving device, and a clock synchronization difference between the sending device and the receiving device.

11. The method as claimed in claim 10, further comprising:
determining a probe communication delay corresponding to a second probe packet;
in a case where the probe communication delay is lower than a second threshold, receiving the second probe packet sent from the sending device, wherein the second probe packet carries a sending time of the sending device; and
determining the clock synchronization difference between the sending device and the receiving device, according to a reception time at which the receiving device receives the second probe packet and the sending time.

12. The method as claimed in claim 8, wherein the decoding instant of the media data frame comprises a first decoding instant of a video data frame and a second decoding instant of an audio data frame; and
the controlling the media data frame to be decoded and played upon reaching the decoding instant comprises:
controlling the video data frame to be decoded and played upon reaching the first decoding instant, and controlling the audio data frame to be decoded and played upon reaching the second decoding instant, thereby enabling the audio-video synchronization when playing the media data frame.

13. The method as claimed in claim 12, further comprising:
obtaining a video decoding consumption time and a video rendering consumption time of the video data frame, and obtaining an audio decoding consumption time and an audio rendering consumption time of the audio data frame;
determining the first decoding instant of the video data frame, by performing a subtraction operation based on the playback delay, the current delay, the video decoding consumption time, and the video rendering consumption time; and
determining the second decoding instant of the audio data frame, by performing a subtraction operation based on the playback delay, the current delay, the audio decoding consumption time, and the audio rendering consumption time.

14. The method as claimed in claim 8, further comprising:
in a case where the current delay is greater than the playback delay, determining a timeout time between the current delay and the playback delay; and
determining a processing mode for the media data frame according to the timeout time.

15. The method as claimed in claim 14, wherein the determining the processing mode for the media data frame according to the timeout time comprises:
in a case where the timeout time is greater than a third threshold, performing frame dropping processing on the media data frame; and
in a case where the timeout time is less than the third threshold, performing accelerated playback processing on the media data frame.

16. An audio-video synchronization apparatus, implemented in a sending device, the audio-video synchronization apparatus comprising:
a first determination unit, configured to: determine, based on communication with a plurality of receiving devices, a target communication delay applicable to the plurality of receiving devices; and determine, according to the target communication delay, a playback delay applicable to the plurality of receiving devices; and
a first transceiver unit, configured to send, to the plurality of receiving devices, a media data frame carrying the playback delay, so that audio-video synchronization is enabled among the plurality of receiving devices when playing the media data frame according to the playback delay.

17. An audio-video synchronization apparatus, implemented by a receiving device, the audio-video synchronization apparatus comprising:
a second transceiver unit, configured to receive a media data frame carrying a playback delay sent from a sending device; and
a playback unit, configured to: determine a decoding instant of the media data frame according to the playback delay; and control the media data frame to be decoded and played upon reaching the decoding instant, thereby enabling audio-video synchronization when playing the media data frame.

18. An electronic device, comprising a memory and a processor, wherein
the memory is configured to store a computer program executable on the processor; and
the processor is configured to, when executing the computer program, perform the method as claimed in any one of claims 1 to 6, or the method as claimed in any one of claims 7 to 15.

19. A computer-readable storage medium having stored thereon a computer program, wherein the computer program, when being executed by a processor, implements the method as claimed in any one of claims 1 to 6, or the method as claimed in any one of claims 7 to 15.

20. A computer program product, comprising a computer program or instructions, wherein the computer program or instructions, when being executed by a processor, implements the method as claimed in any one of claims 1 to 6, or the method as claimed in any one of claims 7 to 15.
